# EUROPÄISCHE PATENTSCHRIFT

(11) **EP 0 448 988 B1**
(45) Veröffentlichungstag und Bekanntmachung des Hinweises auf die Patenterteilung: **27.12.1995**
(21) Anmeldenummer: 91103161.5
(22) Anmeldetag: 02.03.1991
(51) Int. Cl.: G01D 5/24

(54) **Vorrichtung zum berührungslosen Erfassen der Lage eines sich bewegenden Materialbandes**
Apparatus for contactless detection of the position of a moving web
Dispositif pour détecter sans contact la position d'une bande en mouvement

(30) Priorität: 27.03.1990 DE 4009697
(43) Veröffentlichungstag der Anmeldung: 02.10.1991
(73) Patentinhaber: FIFE GmbH, D-65779 Kelkheim (DE)
(72) Erfinder: Kespohl, Peter, W-6240 Königstein (DE)
(74) Vertreter: Nix, Frank Arnold, Dr.

(56) Entgegenhaltungen:
- EP-A- 0 226 082
- DE-A- 1 574 292
- US-A- 4 058 765
- P.H. Sydenham: "Handbook of Measurement Science", Band 2 Practical Fundamentals; John Wiley & Sons, Chester, 1983; Seiten 1052 - 1054
- D.G. Fink and D. Christiansen: "Electronics Engineer's Handbook"; McGraw-Hill, New York, second edition 1982; Seite 17/29

## Beschreibung

Die vorliegende Erfindung bezieht sich auf eine Vorrichtung zum berührungslosen Erfassen der Lage eines sich bewegenden Bandes aus leitfähigem Material mit wenigstens einer kapazitiv an ein Gegenelement gekoppelten Detektorelektrode und einem über diese Ankopplung wirkenden Oszillator, wobei zwei Koppelstrecken im Bereich der beiden Ränder des Materialbandes gebildet sind und eine seitliche Versetzung des Bandes gegensinnig auf die beiden Kopplungen wirkt. Eine solche Vorrichtung gehört zum Stand der Technik, wie er beispielsweise in der DE-AS 15 74 292 betrachtet wird, wobei dort zwei Detektorelektroden im Bereich der Materialbandränder kapazitiv an diese angekoppelt sind und die Veränderungen des Feldes der so gebildeten Kondensatoren durch seitliche Versetzungen des Materialbandes dazu genutzt werden, den Bandlauf zu steuern bzw. zu regeln. Hier ist das Gegenelement somit vom Materialband selbst gebildet.

Diese bekannte Vorrichtung ist jedoch gegenüber Bandlageänderungen nicht sehr empfindlich. Die Unempfindlichkeit ist dadurch verursacht, daS die Detektorelektroden nicht nur mit den Rändern der Materialbahn Kondensatoren (Nutzkapazitäten) bilden, sondern auch mit jedem in ihrer Umgebung befindlichen Maschinenteil. Diese weiteren Kapazitäten sind zu der eigentlichen Nutzkapazität parallel geschaltet und vermindern die relative Empfindlichkeit des Sensorsystems gegen Bandlageänderungen. Da die störenden Maschinenteile in der Nähe der Detektorelektroden im allgemeinen auch nicht symmetrisch angeordnet sind, müssen zum Ausgleich weitere Kondensatoren parallel geschaltet werden, wodurch die Empfindlichkeit des Systems weiter sinkt.

Einen weiteren Nachteil haben Lageerfassungsvorrichtungen, bei denen die Bandränder umgreifende C-förmige Detektorelektroden Anwendung finden. Diese sind in der Industrie vereinzelt gebräuchlich und ergeben eine kompakte Bauweise und eine vielfach befriedigende Funktion.

Es kann bei die Bandränder umgreifenden C-förmigen Detektorelektroden jedoch vorkommen, daS eine Abweichung des Materialbandverlaufs von der Sollage deshalb nicht registriert wird, weil die Abweichung von einer solchen Verkantung des Bandes zwischen den Sensorelektroden begleitet ist, bei der ein Bandrand aus seiner Sensorelektrode etwas austritt, sich aber gleichzeitig stark an einen der Schenkel dieser Sensorelektrode annähert, während der andere Bandrand tiefer in seine Sensorelektrode eintaucht, ohne sich jedoch einem von dessen Schenkeln stärker zu nähern. In einem solchen Fall kann es vorkommen, daß die Koppelkapazitäten zwischen jedem der Bandränder und der zugehörigen Sensorelektrode trotz der verkanteten Lage des Bandes gleich bleiben und die Abweichung deshalb nicht erfaßt wird.

Auch in der genannten DE-AS 15 74 292 wird die geringe Empfindlichkeit gegenüber Bandlageänderungen bemängelt. Abhilfe soll deshalb in der Weise geschaffen werden, daß die Kapazitäten der Koppelstrecken mit einer Induktivität zu einem Schwingkreis ergänzt werden, so daß die Resonanzfrequenz dieses Schwingkreises durch die Bandlage verändert wird. Durch die Güte des Schwingkreises kann nun die Empfindlichkeit der Gesamtanordnung für Bandlageabweichungen beeinflußt werden. Eine hohe Güte ergibt eine hohe Lageempfindlichkeit.

Während die Empfindlichkeit der Vorrichtung auf diese Weise zwar gesteigert werden kann, haftet aber auch dieser ebenso wie den anderen bekannten Vorrichtungen zur kapazitiven Seitenlageerfassung von Materialbahnen der Nachteil an, daß die verwendeten Detektorelektroden nicht nur auf Lageabweichungen des überwachten Materialbandes ansprechen, sondern auch auf alle anderen leitfähigen Körper, die sich in ihrer Nähe befinden. Dabei läßt sich der Einfluß von unbeweglichen Körpern durch zusätzliche Trimmkondensatoren noch so weit kompensieren, daß die Materialbahn mittig geführt werden kann. Die auf diese Weise zu den Detektorkapazitäten parallel geschalteten Kondensatoren wirken sich aber nachteilig auf die Lageempfindlichkeit des Systems aus, da die durch eine Bandlageänderung hervorgerufene Änderung der Kapazität nur noch einen kleineren Bruchteil der Gesamtkapazität darstellt und relativ zu dieser also geringer wird.

Bei beweglichen leitfähigen Maschinenteilen ist eine Kompensation durch feste Parallelkondensatoren nicht mehr möglich. Auch stellt der menschliche Körper eine ausreichend leitfähige Gegenelektrode zu den Detektorelektroden dar, so daß jede Person, die sich in der Nähe der hier beschriebenen Vorrichtungen bewegt, einen störenden Einfluß auf die Anlage ausübt. Dieser Umstand ist insbesondere bei der Wartung und Bedienung derartiger Anlagen sehr störend, da durch Unachtsamkeit verursachte Beeinflussungen der Regelstrecke leicht zu Beschädigungen an dem zu verarbeitenden Material und an der Anlage führen können. Aus diesen Gründen sind die in DE-AS 15 74 292 beschriebenen Vorrichtungen in der Industrie nicht sehr weit verbreitet. Statt dessen werden optische Vorrichtungen zur Abtastung der Bandkanten vorgezogen, obwohl sie sehr störanfällig gegen Verschmutzungen sind.

Eine Abschirmung der Detektorelektroden vor den beschriebenen Störeinflüssen bildet weitere Parallelkapazitäten und wirkt sich in der beschriebenen Weise empfindlichkeitsmindernd aus. Aus diesem Grund müssen die Abstände zwischen den Detektorelektroden und der Abschirmung mindestens so groß sein wie der Abstand zwischen den Detektorelektroden und der Materialbahn selbst, wenn man noch eine ausreichende Systemempfindlichkeit erhalten will. In vielen Fällen ist der Einbau derartiger Abschirmungen aus Platzgründen aber nicht möglich.

An sich ist es aus DE-OS 27 44 785 bekannt, eine kapazitiv auf die Annäherung eines Körpers ansprechende Elektrode durch eine Abschirmelektrode abzuschirmen, deren Potential durch einen Verstärker so gesteuert wird, daß die zeitliche Änderung der Potentialdifferenz zwischen der Ansprechelektrode und der Abschirmelektrode zumindest annähernd Null ist. Hier geht es jedoch nicht um eine Lageregelung eines sich bewegenden Materialbandes, sondern um Näherungsschalter, die ansprechen sollen, wenn kleine Gegenstände eine bestimmte Abstandsschwelle unterschreiten. Schaltungstechnisch geht es hier auch nur darum, den Schwingungseinsatz bzw. den Schwingungsabriß eines Oszillators zu bewirken, dessen Element die Ansprechelektrode ist. Dieses bekannte kapazitive Schaltgerät wäre somit nicht für Positionsmessungen und die laufende Verfolgung der Seitenlageposition sich bewegender Metallbänder meist großer Abmessungen geeignet.

Aus der US-PS 3 781 672 ist eine Sensorelektrode mit einer solchen aktiven Abschirmung bekannt, welche verschiedene bewegte Objekte erfaßt, beispielsweise Reifen und deren Abstand sowie in ihnen vorhandene Defekte oder mit körnigem Material gefüllte Kunststoffschläuche, wobei dessen Zusammensetzung oder der Füllungsgrad überwacht wird. Auch hier wird nicht die Seitenlage der Ränder von sich bewegenden Metallbändern erfaßt.

Aufgabe der Erfindung ist die Schaffung einer Vorrichtung zum Erfassen der Lage eines sich bewegenden Materialbandes, die weitgehend unempfindlich gegenüber externen Störeinflüssen ist und dabei von guter Empfindlichkeit gegenüber den Bandlageänderungen und von kompakter Bauart.

Ausgehend von der eingangs genannten bekannten Technik gelingt die Lösung dieser Aufgabe erfindungsgemäß durch die im Patentanspruch 1 angegebenen Merkmale.

Dadurch, daß die Detektorelektrode(n) auf ihrem der Koppelstrecke abgewandten Bereich von einer Abschirmelektrode umfaßt ist und diese über einen Verstärker des Verstärkungsfaktors 1 an die zugehörige Detektorelektrode(n) in der Weise angeschlossen ist (sind), daß das Potential der Abschirmelektrode zwangsweise dem Potential der Detektorelektrode nachgeführt wird, gelingt eine gute Abschirmung der Sensorelektroden in unmittelbarer Nähe derselben, so daß bei platzsparender Bauweise in der Nähe auftretende Störeinflüsse sich nicht mehr auswirken und dennoch die Empfindlichkeit aufrechterhalten bleibt. Die Empfindlichkeit, d.h. die auf die Bandlageänderung bezogene Änderung der Nutzkapazitäten kann dabei so gesteigert werden, daß auf die in DE-AS 15 74 292 vorgeschlagene Empfindlichkeitserhöhung durch die Ausbildung eines Schwingkreises verzichtet werden kann. Dadurch werden die hierzu notwendigen großen Spulen entbehrlich, was ebenfalls im Sinne einer kompakten Bauweise ist und einer meist angestrebten Miniaturisierung der Auswerteelektronik entgegenkommt.

Dadurch, daß das Gegenelement wenigstens eine Sendeelektrode ist und die Detektorelektrode oder die Sendeelektrode eine auf der einen Seite des Materialbandes parallel zu diesem angeordnete und den Bereich beider Materialbandränder übergreifende Elektrode ist, stellen die Bandränder nicht selbst kapazitiv angekoppelte Gegenelemente zu Detektorelektroden dar, sondern wirken nur beeinflussend auf die kapazitive Kopplung zwischen Detektorelektrode und Gegenelement, die ihrerseits relativ zueinander unbeweglich bleiben. Verkantungen des Bandes haben deshalb kaum verfälschenden Einfluß auf die Erfassung seitlicher Versetzungen.

Zweckmäßige Weiterbildungen der Erfindung sind in den Unteransprüchen angegeben. Von diesen Ausbildungen hat die Ausbildung gemäß Patentanspruch 3 noch den weiteren Vorteil der einfacheren Realisierung und geringerer Ansprüche an die Exaktheit der Ausführung. Während bei der Ausbildung gemäß Patentanspruch 2 darauf zu achten ist, daß die Ableitungen der Detektorelektroden und das von diesen abgenommene Nutzsignal über genau gleiche Verhältnisse aufweisende Signalkanäle zum Verstärker gelangt, damit in diesem eine exakte Differenzbildung gewährleistet ist, entfallen diese strengen Anforderungen bei der Ausbildung gemäß Patentanspruch 3.

Die Erfindung wird nachfolgend durch die Beschreibung von Ausführungsbeispielen an Hand der beigegebenen Zeichnungen weiter erläutert. Es zeigt:
- Fig. 1: schematisch zwei abgeschirmte Detektorelektroden und deren räumliche Zuordnung zu einer als Gegenelement wirkenden Sendeelektrode;
- Fig. 2: schematisch die Anordnung gemäß Fig. 1 in einer Wickelstrecke einer Materialbahn;
- Fig. 3: das Schaltschema einer mit der Anordnung gemäß Fig. 1/2 aufgebauten Vorrichtung zum berührungslosen Erfassen der Lage eines Bandes;
- Fig. 4: das Schaltschema einer zweiten Ausbildung mit einer abgeschirmten Detektorelektrode und zwei mit dieser als Gegenelement zusammenwirkenden, gegenphasig beaufschlagten Sendeelektroden.

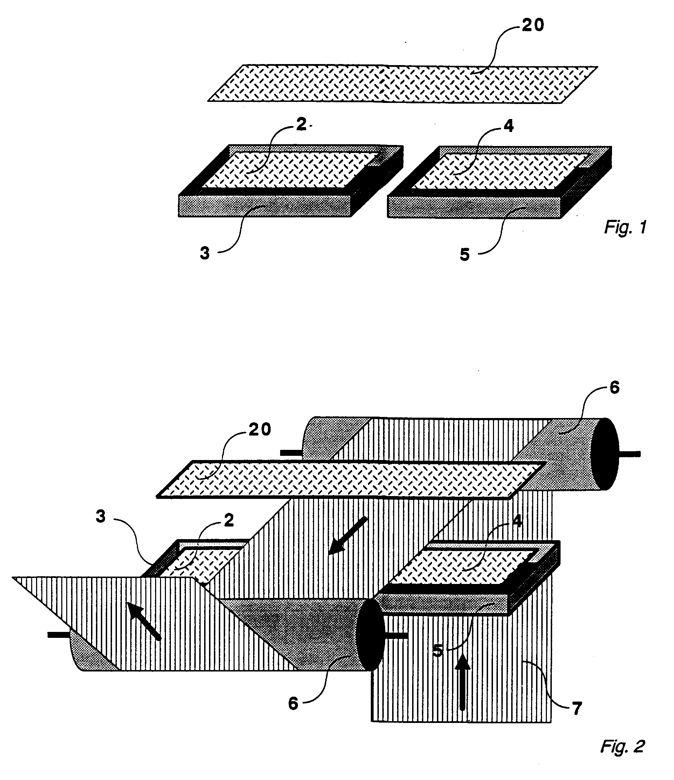

Zu den in Fig. 1 dargestellten Detektorelektroden 2, 4 gehören die Abschirmelektroden 3, 5, welche die Detektorelektroden nach unten und seitlich abschirmend umfassen. Fig. 2 zeigt, wie diese Baueinheiten aus Detektorelektroden und Abschirmelektroden den beiden Rändern einer laufenden Materialbahn 7 aus elektrisch leitendem Material auf einem Abschnitt zwischen zwei Umlenkwalzen 6 zugeordnet sind. Es geht darum, ein Signal über die mittige Lage der Materialbahn bzw. über eventuelle seitliche Versetzungen des Bandlaufs zu gewinnen.

Hierzu dient als mit den Detektorelektroden zusammenwirkendes Gegenelement eine an einen Oszillator 8' angeschlossene und als Sendeelektrode 20 wirkende Elektrode, die sich oberhalb der Materialbahn parallel zu dieser in Querrichtung erstreckt und dabei die Ränder der Materialbahn übergreift. Auf diese Weise beeinflußt die Lage der Bandränder die kapazitive Kopplung zwischen den Detektorelektroden 2, 4 und der Sendeelektrode 20.

Die Sendeelektrode 20 braucht nicht abgeschirmt zu werden, wenn der Oszillator 8' so aufgebaut ist, daß seine Ausgangsspannung bei kapazitivem Lastwechsel konstant bleibt.

Die Detektorelektroden 2, 4 sind mit den Widerständen R1' und R2' verbunden, deren andere Anschlüsse gemeinsam auf Erdpotential liegen. Wenn die Materialbahn 7 mittig zu den Detektorelektroden 2, 4 läuft, dann sind die Koppelkapazitäten zwischen den Elektroden 2 und 20 sowie 4 und 20 gleich groß. Diese Koppelkapazitäten bilden mit den Widerständen R1' und R2' eine Brückenschaltung, deren Diagonalpunkte 9' nur dann abgeglichen sind, wenn sich die Materialbahn mittig zwischen den Detektorelektroden 2, 4 befindet. Zur Signalauswertung wird die Brückenspannung im Verstärker 10' verstärkt und in einem Demodulator 11' weiterverarbeitet.

Ohne Abschirmung der Detektorelektroden wäre die betrachtete Anordnung störanfällig, z. B. durch eine sich in der Nähe der Anlage befindende Person 1. Diese würde auf die nicht abgeschirmte Detektorelektrode 2 einen störenden Einfluß ausüben. Da sie im allgemeinen mit dem Erdpotential verbunden ist, könnte die ihr nächstgelegene Kopplungsstrecke zwischen der Detektorelektrode 2 und der Sendeelektrode 20 beeinflußt werden, je mehr sich die Person 1 der Elektrode 2 nähert.

Störeinflüsse dieser Art sind verhindert durch die Abschirmelektroden 3, 5, wobei jeweils durch die Elektrodenpaare 2, 3 und 4, 5 weitere Kapazitäten gebildet sind.

Um nun zu bewirken, daß die Kapazitäten zwischen den Elektroden 2, 3 und 4, 5 keinen Einfluß auf die Ausgangsspannung der Brückenschaltung haben, ist es notwendig, daß kein Strom über diese Kapazitäten fließt. Dieses Ziel wird dadurch erreicht, daß die Abschirmelektroden 3 und 5 zu jeder Zeit mit genau den gleichen Wechselspannungen beaufschlagt werden, wie sie an den Detektorelektroden 2 und 4 anliegen.

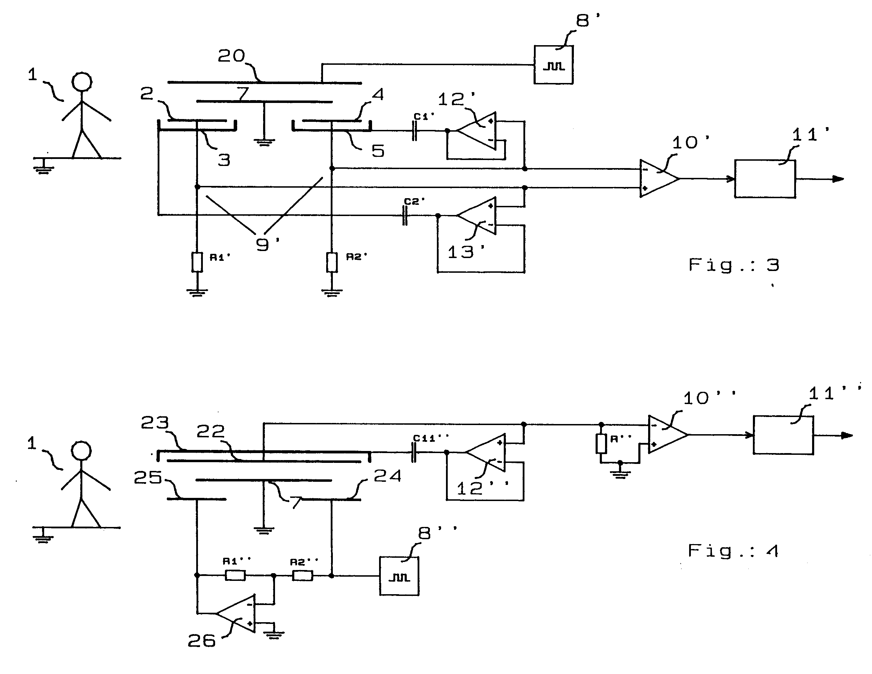

Wie Fig. 3 zeigt, sind an die Diagonalpunkte 9' der Brückenschaltung die Verstärker 12', 13' angeschlossen, die so ausgeführt sein müssen, daß sie auch bei großer kapazitiver Belastung einen Verstärkungsfaktor von genau eins aufweisen. Die Ausgänge dieser Verstärker sind über die Kondensatoren C1' und C2' mit den Abschirmelektroden 3 und 5 verbunden.

Da bei dieser Anbindung kein Strom mehr über die Koppelkapazitäten der Elektrodenpaare 2, 3 und 4, 5 fließt, dürfen diese Kapazitäten durchaus unterschiedlich groß sein, ohne daß sich ein störender Einfluß auf die Lageerfassung der Materialbahn ergibt. Der Einbau von Zusatzkondensatoren wie er nach dem Stand der Technik bisher notwendig gewesen ist, wenn durch Maschinenteile in der näheren Umgebung des Sensors Unsymmetrien auftraten, ist bei der betrachteten Schaltung nicht mehr erforderlich.

Die Empfindlichkeit der Vorrichtung gegenüber Lageänderungen der Materialbahn ist bei der betrachteten Vorrichtung größer als bei einer Schultung ohne Abschirmelektroden, weil die Detektorelektroden 2, 4 keine unerwünschten Kapazitäten mit den Maschinenteilen der näheren Umgebung mehr bilden können und über die zu den Abschirmelektroden hin gebildeten Kapazitäten wegen der Steuerung des Potentials der Abschirmelektroden in der beschriebenen Weise kein Strom fließt. Insbesondere aber übt auch eine zeitlich veränderliche Störung, z.B. durch die Person 1, keinen störenden Einfluß auf die Detektorelektrode 2 aus, wenn der Verstärker 13' in der Lage ist, die kapazitiven Verschiebeströme, die zur Person 1 hin abfließen, zu liefern, ohne daß sich seine Ausgangsspannung verändert. Außerdem ist zu fordern, daß der Scheinwiderstand von C2' für den Arbeitsfrequenzbereich des Oszillators 8 hinreichend klein ist.

Die weitere Signalverarbeitung stellt nur die Auswertung der Ausgangsspannung einer Brückenschaltung dar und ist damit Stand der Technik, der in vielfältiger Weise in Industrie und Meßtechnik angewandt wird. Gemäß Fig. 3 wird die Brückenspannung durch den Verstärker 10' verstärkt. Der nachgeschaltete Demodulator 11', vorzugsweise ein Synchrondemodulator, wandelt dessen Ausgangswechselspannung in eine entsprechende Gleichspannung um. Diese kann dann in herkömmlicher Weise zur Regelung der Bandlage verwendet werden.

In Fig. 4 ist eine zweite Elektrodenanordnung dargestellt. Gegenüber Fig. 3 sind hier bei gleicher Anordnung der Elektroden deren Funktionen vertauscht, sodaß hier eine Detektorelektrode 22 mit einer zugehörigen Abschirmelektrode 23 vorhanden ist und das zugehörige kapazitiv angekoppelte Gegenelement aus zwei Sendeelektroden 24, 25 besteht. Die Sendeelektrode 25 wird mit einer zur Elektrode 24 gegenphasigen Spannung beaufschlagt. Diese gegenphasige Spannung wird vom Verstärker 26 erzeugt. Es ist aber auch möglich, die gegenphasige Spannung durch einen geeigneten Übertrager zu erzeugen.

Hier wirkt die Detektorelektrode 22 als Empfangselektrode, deren Signalspannung vom Verstärker 10'' verstärkt wird, und dann wieder dem Demodulator 11'' zugeführt wird.

Wenn die Materialbahn 7 mittig zu den Sendeelektroden 24, 25 läuft, sind die Koppelkapazitäten zwischen den Elektrodenpaaren 24/22 einerseits und 25/22 andererseits gleich groß und der Einfluß der beiden gegenphasigen Sendespannungen auf die Detektorelektrode 22 hebt sich auf. Das Empfangssignal ist Null. Wenn die Materialbahn 7 nun seitlich versetzt läuft, dann überwiegt der Einfluß einer Sendeelektrode auf die Detektorelektrode und es ist eine Signalspannung an R'' meßbar.

Die Detektorelektroden der vorstehend betrachteten Varianten können mit zusätzlichen geerdeten Schirmelektroden umgeben werden, die mit dem Erdpotential verbunden sind. Besondere Abstände müssen hierbei nicht eingehalten werden. Diese zusätzliche Abschirmung empfiehlt sich immer, wenn mit starken äußeren Störfeldern gerechnet werden muß, die den Betrieb der Verstärker stören könnten. Die Erfassung der Lage der Materialbahn ändert sich dabei nicht.

## Patentansprüche

1. Vorrichtung zum berührungslosen Erfassen der Lage eines laufenden Bandes aus leitfähigem Material mit wenigstens einer Sendeelektrode (20; 24, 25), die mit einem Oszillator (8, 8') verbunden ist, und wenigstens einer kapazitiv an die Sendeelektrode (20; 24, 25) gekoppelten Detektorelektrode (2, 4; 22), wobei entweder die Sendeelektrode (20; 24, 25) oder die Detektorelektrode (2, 4; 22) eine auf der einen Seite des Materialbandes parallel zu diesem und den Bereich beider Materialbandränder in Richtung des Bandlaufs übergreifend anzuordnende Elektrode ist,
wobei zwei Koppelstrecken im Bereich der beiden Ränder des Materialbandes gebildet sind und eine seitliche Versetzung des Bandes gegensinnig auf die beiden Koppelungen wirkt,
und wobei die Detektorelektrode bzw.- elektroden (2, 4; 22) auf ihrem der Koppelstrecke abgewandten Bereich von einer Abschirmelektrode (3, 5; 23) umfaßt ist bzw. sind und diese über einen Verstärker (12, 13; 12') des Verstärkungsfaktors 1 an die zugehörige Detektorelektrode bzw.- elektroden (2, 4; 22) in der Weise angeschlossen ist bzw. sind, daß das Potential der Abschirmelektrode bzw.- elektroden (3, 5; 23) zwangsweise dem Potential der Detektorelektrode bzw.- elektroden (2, 4; 22) nachgeführt wird.

2. Vorrichtung nach Anspruch 1, dadurch gekennzeichnet, daß die beide Materialbandränder übergreifende Elektrode die Sendeelektrode (20) ist
und auf der anderen Seite des Materialbandes (7) im Bereich der Materialbandränder parallel zu diesem je eine Detektorelektrode (2, 4) angeordnet ist, wobei beide Detektorelektroden (2, 4) über je einen Widerstand (R1', R2') geerdet sind und das Nutzsignal von den Diagonalpunkten (9') der so gebildeten Brückenschaltung abgenommen wird.

3. Vorrichtung nach Anspruch 1, dadurch gekennzeichnet, daß die beide Materialbandränder übergreifende Elektrode die Detektorelektrode (22) ist und auf der anderen Seite des Materialbandes (7) im Bereich der Materialbandränder parallel zu diesem je eine Sendeelektrode (24, 25) angeordnet ist, wobei beide Sendeelektroden derart an den Oszillator (8'') angeschlossen sind, daß sie um 180° phasenverschoben beaufschlagt werden.

## Claims

1. Device for the contactless detection of the position of a running tape made of conductive material, having at least one transmission electrode (20; 24, 25), which is connected to an oscillator (8, 8'), and at least one detector electrode (2, 4; 22) capacitively coupled to the transmission electrode (20; 24, 25), wherein either the transmission electrode (20; 24, 25) or the detector electrode (2, 4; 22) is an electrode which is to be arranged on the one side of the material tape in a manner such that it is parallel thereto and overlaps the region of both material tape edges in the direction of the course of the tape,
wherein two coupling sections are formed in the region of the two edges of the material tape, and a lateral displacement of the tape acts in an opposite direction on the two couplings,
and wherein in the region of the detector electrode or detector electrodes (2, 4; 22) that faces away from the coupling section, said detector electrode or detector electrodes (2, 4; 22) is or are surrounded by a screening electrode (3, 5; 23), and the latter is or are connected to the associated detector electrode or detector electrodes (2, 4; 22) by way of an amplifier (12, 13; 12') having an amplification factor of 1 in such a way that the potential of the screening electrode or screening electrodes (3, 5; 23) forcibly follows the potential of the detector electrode or detector electrodes (2, 4; 22).

2. Device according to claim 1, characterised in that the electrode which overlaps both material tape edges is the transmission electrode (20),
and arranged on the other side of the material tape (7), in a manner such that it is parallel thereto in the region of the material tape edges, there is a respective detector electrode (2, 4; 22), wherein both detector electrodes (2, 4) are earthed by way of a respective resistor (R1', R2') and the useful signal is received from the diagonal points (9') of the bridge circuit which is formed in this way.

3. Device according to claim 1, characterised in that the electrode which overlaps both material tape edges is the detector electrode (22), and arranged on the other side of the material tape (7), in a manner such that it is parallel thereto in the region of the material tape edges, there is a respective transmission electrode (24, 25), wherein both transmission electrodes are connected to the oscillator (8'') in such a way that they are acted upon such that they are 180° out of phase.

## Revendications

1. Dispositif pour déterminer sans contact la position d'une bande de matériau conducteur en mouvement, comportant au moins une électrode émettrice (20; 24, 25) qui est connectée à un oscillateur (8, 8') et au moins une électrode détectrice (2, 4; 22) qui est couplée de manière capacitive à l'électrode émettrice (20; 24, 25),
l'électrode émettrice (20; 24, 25) ou l'électrode détectrice (2, 4; 22) étant disposée sur l'une des faces de la bande de matériau, parallèlement à ladite bande, en chevauchant la région des deux bords de celle-ci dans la direction de défilement,
deux intervalles de couplage étant formés dans la région des deux bords de la bande de matériau et un décalage latéral de la bande agissant dans des sens opposés sur les deux couplages,
l'électrode détectrice ou les électrodes détectrices (2, 4; 22) étant entourée(s) sur sa ou sur leur partie éloignée de l'intervalle de couplage par une électrode de blindage (3, 5; 23) et cette ou ces dernière(s) étant connectée(s) par l'intermédiaire d'un amplificateur (12, 13; 12') avec un taux d'amplification 1 à l'électrode ou aux électrodes détectrice(s) (2, 4; 22) de manière telle que le potentiel de l'électrode ou des électrodes de blindage (3, 5; 23) suive systématiquement le potentiel de l'électrode ou des électrodes détectrice(s) (2, 4; 22).

2. Dispositif selon la revendication 1, caractérisé par le fait que l'électrode qui chevauche les deux bords de la bande de matériau est l'électrode émettrice (20) et qu'une électrode détectrice (2, 4) est disposée sur l'autre face de la bande de matériau (7) dans la région de chacun des bords de ladite bande et parallèlement à celle-ci, les deux électrodes détectrice (2, 4) étant connectées à la terre par l'intermédiaire chacune d'une résistance (R1', R2') et le signal utile des points (9') situés en diagonale du branchement en pont ainsi formé étant mesuré.

3. Dispositif selon la revendication 1, caractérisé par le fait que l'électrode qui chevauche les deux bords de la bande de matériau est l'électrode détectrice (22) et qu'une électrode émettrice (24, 25) est disposée sur l'autre face de la bande de matériau (7) dans la région de chacun des bords de ladite bande et parallèlement à celle-ci, les deux électrodes émettrices (24, 25) étant connectées à l'oscillateur (8'') de manière telle qu'elles soient alimentées avec un déphasage de 180°.
